# EUROPEAN PATENT APPLICATION

(11) **EP 1 707 615 A1**
(43) Date of publication of application: **04.10.2006**
(21) Application number: 06013524.1
(22) Date of filing: 03.03.2004
(51) Int. Cl.: C10G 2/00, C10G 45/02

(54) **Synthetic transportation fuel and method for its production**

(30) Priority: 14.03.2003 US 455224; 09.10.2003 US 682244
(62) Divisional of application: 04004989.2
(71) Applicant: Syntroleum Corporation, Tulsa, Oklahoma 74107 (US)
(72) Inventor: Abazajian, Armen, Houston, TX 77062-2332 (US); Tomlinson, Lynn, Tulsa, OK 74114-2413 (US); Freerks, Robert, Jenks, OK 74037-3692 (US)
(74) Representative: Ebner von Eschenbach, Jennifer

(57) **Abstract**

A process for producing a synthetic fuel comprising the steps of
(a) producing a light Fischer-Tropsch liquid;
(b) dehydrating all or a part of the FT oxygenates in the LFTL while retaining the olefin content in the LFTL;
(c) recovering an organic phase from the product of step (b);
(d) blending the organic phase into a transportation fuel.

## Description

### CROSS REFERENCE TO RELATED APPLICATIONS

This application claims priority to U.S. Application Serial No. 60/455,224 filed on March 114, 2003, the contents of which is hereby incorporated by reference in its entirety.

### FEDERALLY SPONSORED RESEARCH

Not applicable.

### REFERENCE TO MICROFICHE APPENDIX

Not applicable.

### FIELD OF THE INVENTION

The invention relates to a method of producing a transportation fuel or blending stock therefor derived from the products of a Fischer-Tropsch synthesis. More specifically, the invention relates to a process in which the oxygenates are converted in a selective low-cost process. The invention further relates to a transportation fuel or blending stock therefor, having a high cetane number, high lubricity, high stability, and having substantially no oxygenates, sulfur or other hetero-atom components.

### BACKGROUND OF THE INVENTION

Synthetic transportation fuels are increasingly in demand because they contain no sulfur or aromatics and typically have high cetane numbers. The Fischer-Tropsch process used to make synthetic transportation fuels, however, results in a syncrude product containing oxygenates ("FT oxygenates"). The FT oxygenates typically include primary and internal alcohols, which constitute the major portion of the total FT oxygenate, as well as aldehydes, ketones and acids. The presence of FT oxygenates presents certain problems with processing the syncrude, including a negative impact on hydroprocessing catalysts which necessitates an increase in the severity of hydroprocessing conditions. With increasing severity of hydroprocessing, yield loss increases. The term "hydroprocessing" as used herein means hydrocracking, hydroisomerization, hydrodewaxing, or a combination of two or more of these processes.

Alternatively, the FT oxygenates may be removed through hydrotreatment. However, hydrotreatment requires significant additional capital equipment expenditures. The FT oxygenate content is generally higher in the lower boiling range distillation cuts of the Fischer-Tropsch product and declines precipitously above a 600°F cut point. One method of avoiding the negative impact of the FT oxygenates on the hydrocracking catalysts is to bypass the lower boiling range distillation cuts around the hydrocracking unit. The lower boiling range distillation cuts, including any FT oxygenate content therein, are then re-blended with the hydrocracked higher boiling range distillation cut to form the product fuel. While a bypassed 250-400°F distillation cut has no appreciable negative impact when re-blended into the product fuel, reincorporation of a bypassed 400°F+ distillation cut impairs the low temperature properties of the product fuel due to the presence of FT oxygenates. Therefore, it is common to hydroprocess the entire 400°F+ fractions, including hydrogenation of FT oxygenates, which has significant negative impact on hydroprocessing catalyst life and further causes yield loss. Catalytic hydroprocessing catalysts of noble metals are well known, some of which are described in U.S. Patents 3,852,207; 4,157,294; 3,904,513 the disclosures of which are incorporated herein by reference. Hydroprocessing utilizing non-noble metals, such as cobalt catalysts, promoted with rhenium, zirconium, hafnium, cerium or uranium, to form a mixture of paraffins and olefins has also been used. As mentioned above, however, hydroprocessing at severe conditions raises the costs of processing and the resulting product and further results in yield loss.

There remains a need, therefore, for an improved integrated Fischer-Tropsch process in which the FT oxygenates may be wholly or partially removed at a lower cost than known hydroprocessing means and without a substantial yield loss. There remains a further need for a transportation fuel or blending stock therefor which contains substantially no sulfur, FT oxygenates or other hetero-atom components, but which has a high lubricity and high stability, and which can be produced economically.

### SUMMARY OF THE INVENTION

The invention meets these and other needs by providing a transportation fuel or blending stock for a transportation fuel which contains substantially no FT oxygenates, sulfur or other hetero-atom components. The invention further provides a method of producing a transportation fuel or blending stock which eliminates oxygenates, improves lubricity and lower temperature properties, but which is economical and does not cause any significant yield loss or which results in significantly less yield loss than known hydroprocessing and hydrotreatment methods.

In one embodiment of the invention, a synthetic fuel is provided wherein the synthetic fuel comprises a hydrocarbon mixture having a carbon number range from about C₇ to about C₂₄ wherein the hydrocarbon mixture comprises substantially no FT oxygenates, at least about 5wt% n-paraffins and between about 11% and about 20% olefins by weight, and between about 2 wt% and about 90 wt% branched paraffins wherein less than 50% of all branch groups are monomethyl and wherein the ratio of terminal monomethyl branching to internal monomethyl branching is at least about 1:1.5.

In another embodiment of the invention, a process for producing a synthetic fuel is provided wherein the process comprises the steps of (a) producing a light Fischer-Tropsch liquid; (b) dehydrating all or a part of the FT oxygenates in the LFTL while retaining the olefin content in the LFTL; (c) recovering a dehydrated product; (d) separating the aqueous and organic phases of the dehydrated product; and (e) blending the organic phase of the dehydrated product into a transportation fuel.

Additional embodiments and advantages of the invention will be apparent by reference to the figures, description of the embodiments and claims.

### BRIEF DESCRIPTION OF THE DRAWINGS

Fig. 1 is a schematic of an embodiment of the integrated Fischer-Tropsch process of the invention.

Fig. 2 is a schematic of an alternative embodiment of the Fischer-Tropsch process of the invention.

Fig. 3 is a schematic of a possible hydroprocessing arrangement of the Fischer-Tropsch process of the invention.

### DESCRIPTION OF EMBODIMENTS OF THE INVENTION

The term "Cₓ", where x is a number greater than zero, refers to a hydrocarbon compound having predominantly a carbon number of x. As used herein, the term Cₓ may be modified by reference to a particular species of hydrocarbons, such as, for example, C₅ olefins. In such instance, the term means an olefin stream comprised predominantly of pentenes but which may have impurity amounts, i.e. less than about 10%, of olefins having other carbon numbers such as hexene, heptene, propene, or butene. Similarly, the term "Cₓ+" refers to a stream wherein the hydrocarbons are predominantly those having a hydrocarbon number of x or greater but which may also contain impurity levels of hydrocarbons having a carbon number of less than x. For example, the term C₁₅+ means hydrocarbons having a carbon number of 15 or greater but which may contain impurity levels of hydrocarbons having carbon numbers of less than 15. The term "Cₓ-C_{y}", where x and y are numbers greater than zero, refers to a mixture of hydrocarbon compounds wherein the predominant component hydrocarbons, collectively about 90% or greater by weight, have carbon numbers between x and y inclusive. For example, the term Cs- C₉ hydrocarbons means a mixture of hydrocarbon compounds which is predominantly comprised of hydrocarbons having carbon numbers between 5 and 9 inclusive, but may also include impurity level quantities of hydrocarbons having other carbon numbers.

As used herein the term "high lubricity" means having a wear scar of average diameter of about ≤ 0.46 mm at 60°C tested in accordance with ASTM Standard D-6079-02 entitled "Standard Test Method for Evaluating Lubricity of Diesel Fuels by the High-Frequency Reciprocating Rig." The terms "high stability" and "high oxidative stability" mean having a total solids ≤ 1.5 mg/100 ml tested in accordance with ASTM Standard D-22-74-01a entitled "Standard Test Method for Oxidation Stability of Distillate Fuel Oil (Accelerated Method)." Note that these methods are being applied herein to the analysis and characterization of synthetic products although the standards refer expressly to petroleum derived products.

Unless otherwise specified, all quantities, percentages and ratios herein are by weight.

The Fischer-Tropsch process includes processing of synthesis gas to produce a hydrocarbon stream via the Fischer-Tropsch reaction, recovery of the Fischer-Tropsch product, catalytic dehydration of all or part of the Fischer-Tropsch product, and recovery of the hydrocarbons by phase separation. For the purposes of the inventive process, the Fischer-Tropsch synthesis are useful in the invention described in *inter alia,* in U.S. 4,973,453; 6,172,124; 6,169,120; and 6,130,259; the disclosures of which are all incorporated herein by reference.

The Fischer-Tropsch conversion system for converting hydrocarbon gases to liquid or solid hydrocarbon products using autothermal reforming includes a synthesis gas unit, which includes a synthesis gas reactor in the form of an autothermal reforming reactor (ATR) containing a reforming catalyst, such as a nickel-containing catalyst. A stream of light hydrocarbons to be converted, which may include natural gas, is introduced into the reactor along with oxygen (O₂). The oxygen may be provided from compressed air or other compressed oxygen-containing gas, or may be a pure oxygen stream. The ATR reaction may be adiabatic, with no heat being added or removed from the reactor other than from the feeds and the heat of reaction. The reaction is carried out under sub-stoichiometric conditions whereby the oxygen/steam/gas mixture is converted to syngas.

The Fischer-Tropsch reaction for converting syngas, which is composed primarily of carbon monoxide (CO) and hydrogen gas (H₂), may be characterized by the following general reaction:

2nH₂+nCO → (-CH₂-)ₙ + nH₂O (1)

Non-reactive components, such as nitrogen, may also be included or mixed with the syngas. This may occur in those instances where air, enriched air, or some other non-pure oxygen source is used during the syngas formation.

The syngas is delivered to a synthesis unit, which includes a Fischer-Tropsch reactor (FTR) containing a Fischer-Tropsch catalyst. Numerous Fischer-Tropsch catalysts may be used in carrying out the reaction. These include cobalt, iron, ruthenium as well as other Group VIIIB transition metals or combinations of such metals, to prepare both saturated and unsaturated hydrocarbons. The Fischer-Tropsch catalyst may include a support, such as a metal-oxide support, including silica, alumina, silica-alumina or titanium oxides. For example, a Co catalyst on transition alumina with a surface area of approximately 100 to about 200 m²/g may be used in the form of spheres of about 50 to about 150 µm in diameter. The Co concentration on the support may be between about 15% and about 30% by weight. Certain catalyst promoters and stabilizers may be used. The stabilizers include Group IIA or Group IIIB metals, while the promoters may include elements from Group VIII or Group VIIB. The Fischer-Tropsch catalyst and reaction conditions may be selected to be optimal for desired reaction products, such as for hydrocarbons of certain chain lengths or number of carbon atoms. Any of the following reactor configurations may be employed for Fischer-Tropsch synthesis: fixed bed, slurry bed reactor, ebullating bed, fluidizing bed, or continuously stirred tank reactor (CSTR). The FTR may be operated at a pressure of about 100 psia to about 500 psia and a temperature of about 375° F to about 500° F. The reactor gas hourly space velocity ("GHSV") may be from about 1000 to about 8000 hr⁻¹. Syngas useful in producing a Fischer-Tropsch product useful in the invention may contain gaseous hydrocarbons, hydrogen, carbon monoxide and nitrogen with H₂/CO ratios from about 1.8:1 to about 2.4:1. The hydrocarbon products derived from the Fischer-Tropsch reaction may range from methane (CH₄) to high molecular weight paraffinic waxes containing more than 100 carbon atoms.

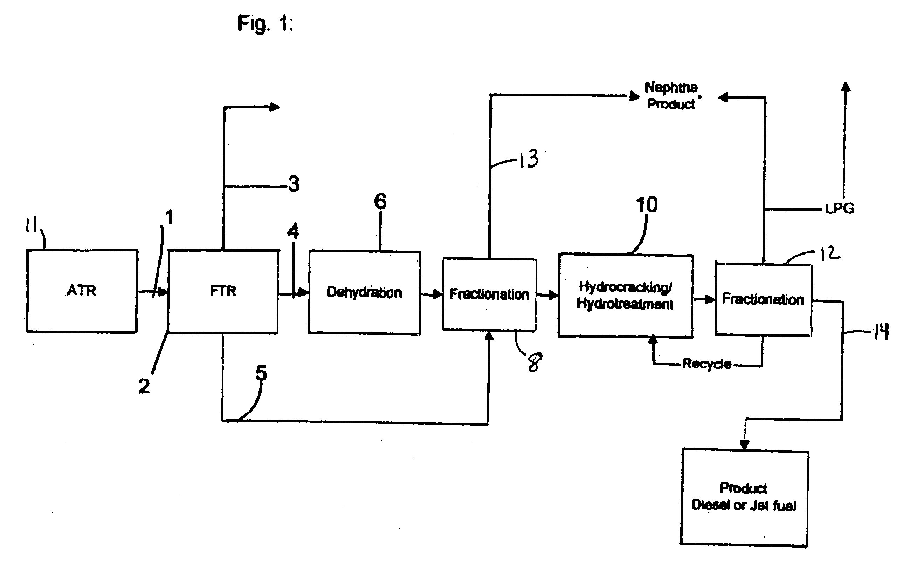

Referring to Fig. 1, an overview of the Fischer-Tropsch process is illustrated. Synthesis gas produced in ATR 11 is fed through line 1 to a Fischer-Tropsch reactor (FTR) 2. The tail gas of the Fischer-Tropsch product is recovered overhead in line 3 and the Fischer-Tropsch oil and wax are fractionated and recovered through lines 4 and 5, respectively. The product recovered in line 4 is a Light Fischer-Tropsch Liquid (LFTL), and the product recovered in line 5 is a Heavy Fischer-Tropsch Liquid (HFTL).

The LFTL fraction will contain between about 2% and about 15% of isoparaffins. Substantially all of the isoparaffins are terminal monomethyl species. For the purposes of this invention, the terminal species are 2- and 3-methyl branched. The ratio of terminal monomethyl to internal monomethyl branching in the LFTL paraffins may range from about 1:1.5, 1:1, 1.5:1, 2:1, or greater. Unless otherwise noted, all percentages herein are by weight.

All or part of the LFTL, which is comprised primarily of C₂ to C₂₄ hydrocarbons, is fed into dehydration unit 6. In dehydration unit 6, primary and internal alcohols, i.e., FT oxygenates, present in the LFTL are dehydrated to yield corresponding olefins. A detailed discussion of the dehydration process is contained in co-pending, commonly-owned application entitled "Integrated Fischer-Tropsch Process with Improved Oxygenate Processing Capability", Provisional Application Serial No. 60/455,224, naming Armen Abazajian et al. as inventors, now utility Application Serial No. 10/426,154, the disclosures of which are incorporated herein by reference. Alternatively, the LFTL may be distilled prior to dehydration to separate out a C₈-C₂₀₊ cut which is then passed into dehydration unit 6.

The dehydrated product produced in dehydration unit 6 is recovered and condensed. The condensed product will contain aqueous and organic phases which may be separated using any appropriate method, such as phase separation. Both the organic and aqueous phases are essentially free of alcohols, the alcohols having been substantially completely dehydrated. The organic phase primarily contains paraffins with some olefins, the olefins arising from dehydration of the alcohols as well as from the Fischer-Tropsch product.

The organic phase may be passed to a fractionator 8. HFTL from FTR 2 may also be passed into fractionator 8 through conduit 5. A naphtha product may be removed overhead from fractionator 8 through conduit 13 and a C₈₊ fraction passed into hydrocracker/hydrotreatment unit 10 in which the C₈₊ fraction is cracked to lower molecular weight hydrocarbons.

The hydrocracked product produced in hydrocracker/hydrotreatment unit 10 is passed to a second fractionating unit 12 where a middle distillate having a nominal boiling range of between about 250°F and about 700°F is recovered through conduit 14. All or part of the middle distillate may be used as a transportation fuel or blending stock therefor.

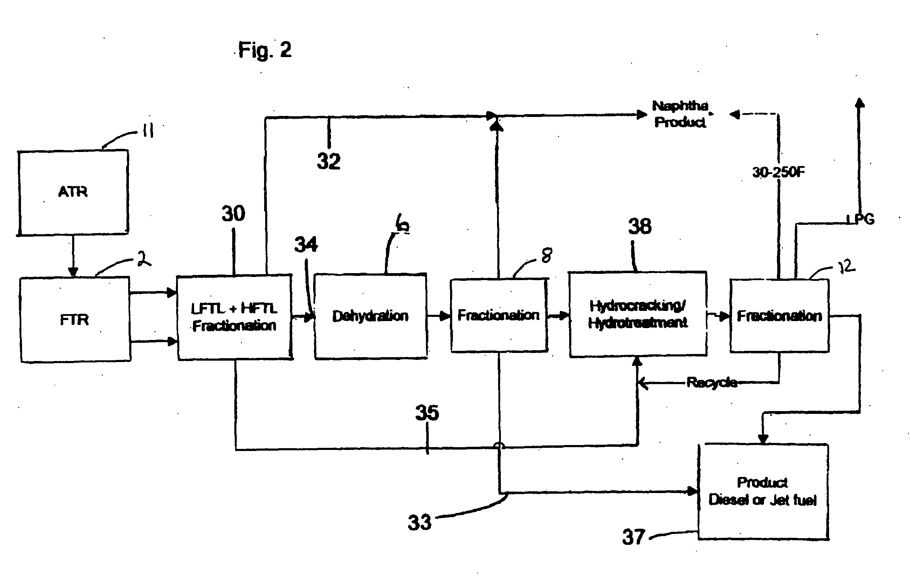

Fig. 2 illustrates an alternative embodiment of the integrated Fischer-Tropsch process. The LFTL and HFTL are combined and fractionated in a distillation column 30. Nominal 30°-600°F product is removed as one or more side-streams, including a nominal 30°-250°F fraction through line 32, a nominal 250°-500°F fraction though line 34, and a nominal 500°F+ fraction through line 35. Only the 250°-500°F fraction is routed to the dehydration unit 6. Following dehydration may then be recovered, fractionatedThe dehydrated 250°-500°F fraction is sent through conduit 33 to a product receptacle and/or blending unit 37.

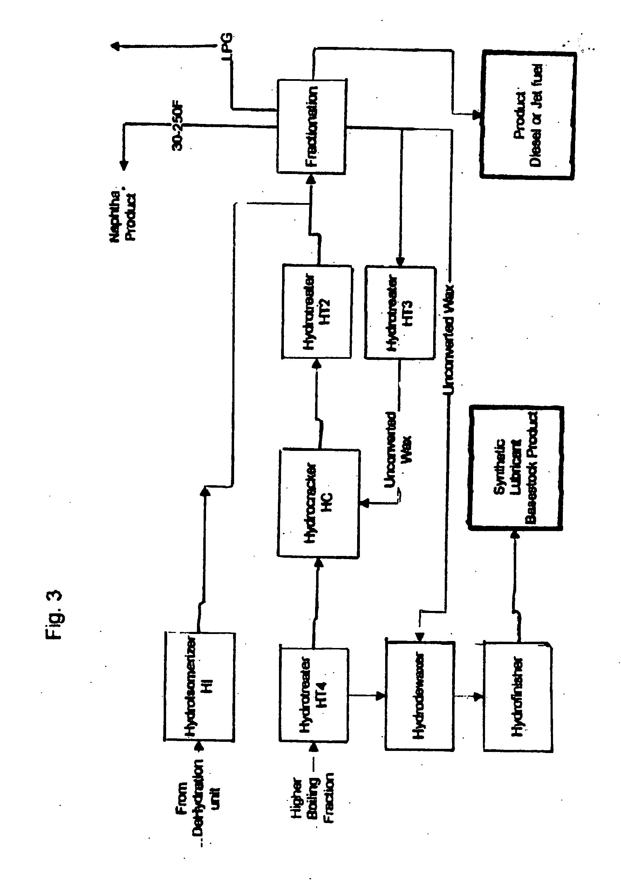

Fig. 1 depicts the dehydrated product mixture of paraffins and olefins as also being routed to hydrocracking/hydrotreating unit 10, which is appropriate where a fully hydrotreated product is desired. However, the dehydrated product mixture may alternatively be separately hydroisomerized. In yet another embodiment, the dehydrated product mixture may receive no post-dehydration hydroprocessing. Fig. 3 depicts several acceptable hydrocracker/hydroisomerizer arrangement. However, any of a number of alternative post-dehydration and higher boiling range fraction treatment schemes may be employed within the integrated Fischer-Tropsch process depending upon the desired slate of products. For example, referring to Fig. 3, alternative treatment schemes include:
a) Hydroisomerization of the dehydrated product; hydrocracking of the 500°F+ fraction followed by hydrotreatment.
b) No post-dehydration treatment of the dehydrated product; hydrocracking of the 500°F+ fraction.
c) No post-dehydration treatment of the dehydrated product; hydrocracking of the 500°F+ fraction followed by hydrotreatment.
d) Hydroisomerization of the dehydrated product; no hydroprocessing of the 500°F+ fraction; reblending of the dehydrated - hydroisomerized product with the 500°F+ fraction followed by fractionation; hydrocracking of the bottoms stream of the fractionation.
e) Hydroisomerization of the dehydrated product; hydrocracking of the 500°F+ fraction.
f) No post-dehydration treatment of the dehydrated product; hydrotreatment followed by hydrocracking of the 500°F+ fraction.
g) No post-dehydration treatment of the dehydrated product; hydrotreatment of the 500°F+ fraction.
h) No post-dehydration treatment of the dehydrated product; hydrotreatment, hydrocracking and hydrofinishing of the 500°F+ fraction.
i) No post-dehydration treatment of the dehydrated product; hydrotreatment and hydrocracking of the 500°F+ fraction; hydrodewaxing of the unconverted hydrocracker bottoms and hydrofinishing of a lubricant basestock.
j) No post-dehydration treatment of the dehydrated product; hydrocracking of the 500°F+ fraction; hydrotreatment of the unconverted wax.

These alternative treatment schemes are only some of the variations encompassed by and useful in the inventive Fischer-Tropsch process. Thus, the list above and Fig. 3 are intended to merely illustrate, and not limit, a portion of the inventive Fischer-Tropsch process. Possible process conditions and parameters for hydroisomerizing, hydrotreating and hydrocracking the relevant hydrocarbon streams are well known in the art. One example of hydroprocessing conditions and parameters is described in U.S. Patent Nos. 5,286,455, 6,296,757, and 6,180,842, the disclosure of which are incorporated herein by reference. A large number of alternative hydroprocessing conditions and parameters are also well known in the art and may be useful in connection with the integrated Fischer-Tropsch process described herein. Therefore, incorporation of the above-referenced U.S. Patents are not intended to limit the inventive process.

Processing schemes (a), (b), (c), (d), (e), (f), and (j) are most useful for producing ultraclean synthetic middle distillate fuels. The product of the integrated Fischer-Tropsch process may be used directly as a transportation fuel or as a blending stock for formulating a transportation fuel. In addition, schemes (b), (c), (f), (g), (h), (i), and (j) are most useful for making olefin/paraffin mixtures as dehydrated product which can be used as feedstocks for single product middle distillate fuel feedstocks. Note that where the dehydration product is not subjected to hydroprocessing or hydrotreatment, olefins produced in the Fischer-Tropsch reaction remain in the middle distillate fraction and are incorporated into the synthetic transportation fuel.

Because the middle distillate portion of the dehydrated LFTL contains only a relatively low level, i.e., about 2 wt% to about 10 wt%, of branched paraffins essentially all of which are monomethyl branched, the middle distillate by itself is generally not used as a transportation fuel. That is, the high ratio of normal paraffins results in cloud and freeze points which prohibit the incorporation of higher molecular weight paraffins. Most diesel and essentially all jet fuels may require blending with the hydrocracked HFTL portion. Because the hydrocracking process yields more highly branched paraffins, the hydrocracked HFTL portion generally lowers the cloud and freeze points of the final blended fuel. In fact, the hydrocracked HFTL contains a large proportion of multimethyl-branched isoparaffins. Moreover, those molecules in the hydrocracked HFTL that are monomethyl-branched are more likely to be terminally branched. As a consequence, between about 20 and about 75% of the branched paraffins in the resulting blended fuel are monomethyl-branched, depending on the final properties of the fuel. Furthermore, among the monomethyl-branched paraffins, the terminal monomethyl species predominate.

In another embodiment of the invention, a hydrocarbon mixture produced by the integrated Fischer-Tropsch process is provided.

In yet another aspect of the invention, a synthetic transportation fuel or blending stock therefor having no sulfur, essentially no FT oxygenates, a cetane number of at least 50, and a cloud point or freezing point of less than about 5°C. The synthetic transportation fuel may contain between about 1wt% and about 20 wt% olefins, of which at least about 1wt% is mono-olefin in the 200° to 700°F boiling point range.

### Example 1

A pilot installation consisting of two distillation columns was used to produce C₁₀₋₁₃ light kerosene and C₁₃₋₂₀₊ drilling fluid feedstock streams. The columns were fed approximately 3400 g/hr of liquid Fischer-Tropsch oil. The Fischer-Tropsch oil had approximately the following composition:

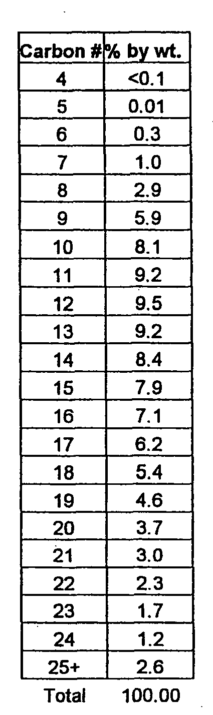

The Fischer-Tropsch oil was fed into the first column and C₁₃ and lighter materials were distilled overhead. The column conditions were: 10 psig pressure, 480°F feed preheat temperature, 407°F overhead temperature, 582°F bottoms temperature. The first column had approximately 98 inches of Sulzer Mellapack 750Y packing. The overheads of the first column was fed into the second column operating at 12 psig pressure, 370°F overhead temperature and 437°F bottoms temperature. The second column was packed with 28 inches of Sulzer EX packing. The bottoms of the second column constituted the product C₁₀₋₁₃ light kerosene stream. The bottoms of the first column constituted C₁₃₋₂₀₊ heavy diesel and drilling fluid feedstock. The compositions of C₁₀₋₁₃ light kerosene stream (Feed A) and C₁₃₋₂₀₊ (Feed B) are shown in Tables 1 and 2, respectively.

**TABLE 1**

| Total n-paraffins, isoparaffins, olefins and alcohols | Mass % |
|---|---|
| C7- | 0.02 |
| C8 | 0.25 |
| C9 | 1.29 |
| C10 | 9.83 |
| C11 | 33.51 |
| C12 | 43.04 |
| C13 | 11.47 |
| C14 | 0.49 |
| TOTAL C 15+ | 0.10 |
| | 100.00 |

**TABLE 2**

| Total n-paraffins, isoparaffins, olefins and alcohols | Mass % |
|---|---|
| C11-: | 0.97 |
| C12: | 1.77 |
| C13: | 11.43 |
| C14: | 13.68 |
| C15: | 12.35 |
| C16: | 10.96 |
| C17: | 9.06 |
| C18: | 7.84 |
| C19: | 6.79 |
| C20: | 7.04 |
| C21: | 5.66 |
| C22: | 4.63 |
| C23+: | 7.83 |
| | 100.00 |

### Example 2

30 cc/hr of a Feed A from Example 1 was fed via a syringe pump and mixed with 20 cc/min of nitrogen. The gas/liquid mixture was introduced upflow into a vessel packed with stainless steel mesh saddles, where the liquid was vaporized and superheated to reaction temperature of 560°F. The vaporized feed was fed upflow into a reactor packed with 1/8 Alcoa S-400 alumina catalyst and suspended in a heated sandbath. The sandbath was maintained at the reaction temperature and ebulated by air. Reactor LHSV was maintained at about 0.26 hr⁻¹. The reactor outlet was condensed and Product A and water by-product was collected in a product accumulator. System pressure was maintained by controlling the product accumulator overhead pressure at 50 psig. A water layer was drained and the organic layer product analyzed in a HP 5890 Series II GC with a 60 m RTX1 capillary column with a 0.32 mm bore and 3-micron film thickness. The compositions of Feed A and Product A are reported in Table 3. The product was also analyzed on a ¹H NMR 300 MHz JOEL analyzer, confirming complete absence of alcohols.

### Example 3

15 cc/hr of Feed A from Example 1 was processed in a benchscale process described in Example 2. The feed was vaporized and superheated to 650°F. Reactor LHSV was approximately 0.26 hr⁻¹ to make Product A and, 0.13 hr⁻¹ to make Product B. Composition of Product B from this example is reported in Table 3. ¹H NMR analysis confirmed absence of alcohols in the product.

**TABLE 3**

| **Sample Reference Number** | **Feed A** | **Product A** | **Product B** |
|---|---|---|---|
| | Mass % | Mass % | Mass % |
| N-PARAFFIN | 80.64 | 80.23 | 79.90 |
| ALPHA OLEFIN | 4.43 | 8.20 | 7.96 |
| INTERNAL OLEFIN | 3.04 | 3.37 | 3.91 |
| BRANCHED PARAFFIN | 8.21 | 8.19 | 8.22 |
| ALCOHOL | 3.68 | 0.00 | 0.00 |
| | 100.00 | 100.00 | 100.00 |

### Example 4

Feed A from Example 1 was spiked with approximately 5% of hexanol, composing Feed A' and fed at 15 cc/min into a benchscale process described in Example 3. Nitrogen feed was maintained at 10 cc/min. Composition of Product C from this example is reported in Table 4. ¹H NMR analysis confirmed absence of alcohols in the product.

**TABLE 4**

| | **Feed A'** | **Product C** |
|---|---|---|
| | Mass % | Mass % |
| N-PARAFFIN | 75.12 | 75.14 |
| ALPHA OLEFIN | 4.15 | 10.75 |
| INTERNAL OLEFIN | 3.03 | 4.47 |
| BRANCHED PARAFFIN | 9.67 | 9.64 |
| ALCOHOL | 8.03 | 0.00 |
| TOTAL | 100.00 | 100.00 |

### Example 5

Feed B from Example 1 was fed into the process described in Example 4. The reaction temperature was maintained at 675°F and the outlet pressure was maintained at about 5 psig. The reaction Product D is shown in Table 5.

**TABLE 5**

| **Sample Reference Number** | **Feed B** | **Product D** |
|---|---|---|
| | Mass% | Mass% |
| N-PARAFFIN | 82.46 | 82.87 |
| ALPHA OLEFIN | 2.26 | 3.48 |
| INTERNAL OLEFIN | 2.75 | 3.68 |
| BRANCHED PARAFFIN | 10.10 | 9.97 |
| ALCOHOL | 2.45 | 0.00 |
| Total | 100.00 | 100.00 |

### Example 6

Products A and D from Examples 3 and 5, respectively, were blended in a ratio of about 1:2.5. The blended product was flashed to remove approximately 7% of the total volume of the blended product was collected overhead as a light end fraction and the 15% of the total volume of the blended product was retained as a heavy end fraction. The remaining middle cut, about 78% of the total volume of the blended product, contained about 8% olefins. This middle cut was then blended 1:1 with a fully hydroprocessed Fischer-Tropsch diesel having no unsaturation or significant hetero-atom content (Fuel Y). The resulting fuel sample (Fuel X) had a flashpoint of 146°F, and a cloud point -6°C. Fuel X was submitted for a blind HFRR (ASTM D-6079) lubricity test with two comparative samples: Fuel Y, having a flashpoint of 136°F and cloud point of -21°C and an ASTM supplied mineral-based ULSD diesel (Fuel Z), having a flashpoint of 130°F and a cloud point of -11°C. The lubricity test results are summarized in Table 6.

**TABLE 6**

| Samples | (D-6079) mm @ 60°C |
|---|---|
| Y | 0.574 |
| X | 0.391 |
| Z | 0.501 |

HFRR test results report an average wear scar diameter. A smaller number indicates a smaller wear scar and, consequently, a more lubricious fuel.

### Example 7

Fuel X' was produced by mixing Fuel X (from Example 6) with a mixture of Fuel Y and 1-dodecene in a ratio of 1 part of Fuel X to 2.2 parts of the Fuel Y plus 1-dodecene mixture. The ratio of Fuel Y to 1-dodecene was determined so that Fuel X' contained about 4% olefins. Fuel X', Fuel Y, and Fuel Z were submitted for oxidative stability testing in accordance with ASTM D-2274.

**TABLE 7**

| **Samples** | Y | X' | Z |
|---|---|---|---|
| Filterable Insolubles (mg./100 ml) | 1.1 | 0.1 | 0.1 |
| Adherent Insolubles (mg/100 ml) | 0.2 | 0.4 | 0.3 |
| Total Insolubles (mg/100 ml) | 1.3 | 0.5 | 0.4 |

### Example 8

Fischer-Tropsch oil and Fischer-Tropsch wax were fed into a pilot hydrotreater and hydrocracker arrangement in series. The hydrotreater was operated at 500°F and the hydrocracker was operated at 716°F and total LHSV of about 1 hr⁻¹. The gas/oil ratio was 3568 scf/bbl. The resulting diesel fuel E had the following properties:

**Table 8.**

| **Analysis** | **Testing Method** | **Fuel E** |
|---|---|---|
| Density @ 15°C, g/ml | D4052 | 0.7679 |
| Cetane Number | D613 | >74.8 |
| Cetane Index | D4737 | 78 |
| Flash Point, °C | D93 | 62 |
| CFPP, °C | D6317 | -21 |
| Cloud Point, °C | D5773 | -11.9 |
| Flash Point, °C | D56 | -- |

Fuel E was analyzed on a capillary GC to identify the type of branching in the sample. The results, in vol%, are summarized in Table 9.

**Table 9.**

| 2/3-Me | 4-Me+ | Mono Methyl | Multi-Methyl |
|---|---|---|---|
| 10.6978 | 13.3841 | 24.0820 | 18.3575 |

The balance of the sample is normal paraffins. The ratio of 2/3 methyl-branched isoparaffins or terminal-branched isoparaffins to internal-branched isoparaffins (4-Me+) in Fuel E is about 1:1.25. Further, the ratio of the monomethyl content of Fuel E to the multi-methyl content is about 1.3:1 (57% of the branching is monomethyl and 43% is multi-methyl).

As can be seen from the discussion above, the process and synthetic fuel of the invention provide one or more of several advantages and benefits, which are discussed below.

Lower capital cost is incurred by elimination of a hydrotreatment unit. At a minimum, lower operating costs are achieved by reduction in hydrotreatment and milder hydroprocessing conditions.

One advantage of the inventive Fischer-Tropsch process is improvement of yield of useful products. It is known by those skilled in the art that oxygenates in the hydrocracking feed reduce hydrocracking catalyst life and therefore, necessitate higher hydrocracking temperatures to achieve the required low temperature properties of a specific boiling range and to maintain conversion per pass. Higher hydrocracking temperatures lead to lower product yields. Moreover, bypassing the Fischer-Tropsch product in the middle distillate range directly to product blending introduces alcohols into the final product. Alcohols are known to have poor low temperature properties, such as freeze point and cloud point. Poor low temperature properties are especially detrimental in formulating military and jet fuels. Hydrocracking conditions must be intensified to compensate for the impact of the alcohols thereby resulting in yield loss. Similarly, if the product being bypassed is hydrotreated, it is well known that paraffins generated in hydrotreatment have higher freeze point and yet again cause deterioration in the low temperature properties of the blended product. The inventive Fisher-Tropsch process disposes of the alcohols by converting them into olefins which have beneficial low temperature properties.

In processing mineral, petroleum-based transportation fuels, much effort is spent to hydrogenate any olefms present to improve the stability of the fuel. This is necessary because in mineral transportation fuel processing the unsaturation comes from a number of thermal and catalytic refining cracking processes, which are not selective, and, in addition to mono-olefins also produce dienes, trienes, and alkynes. These species are known to oligomerize and polymerize readily in storage or in fuel tanks, thus producing gums deleterious for fuel systems. Because of the selectivity of the inventive Fischer-Tropsch process the inventive transportation fuel has virtually none of the higher unsaturates, but only internal and alpha-mono-olefins, which do not oligomerize easily and do not form gum. Furthermore, elimination of oxgenates from the transportation fuel as it is done in the inventive process, assures that the fuel is not hygroscopic. Water retention of the fuels is not an attractive characteristic as it may lead to freezing of the retained water in the fuel lines during ambient temperatures below 32°F.

It is known in the art that linear and internal olefins exhibit higher lubricity and higher metal adherence than either paraffins or isoparaffins. This is explained by the higher electron density of the double bond being attracted to positive sites on the partially oxidized metal surface. Thus, a fuel with a sufficiently high content of both alpha-and internal olefins will have somewhat better lubricity than the entirely paraffinic component of the same fuel.

It is known that compounds containing hetero-atoms, such as sulfur and oxygen, are beneficial to lubricity and stability, and, in fact, are used as additives for those purposes. However, use of hetero-atoms is disadvantageous as described above. The invention provides hydrocarbon fuel which does not contain hetero-atoms and which has the lubricity and stability characteristics of a hetero-atom containing fuel.

A distinguishing characteristic of Fischer-Tropsch derived fuels is their high cetane number credited to very high normal and slightly-branched paraffin content. It is well known in the art that the cetane number of linear alpha-and internal-olefins is also very high. Typically, the cetane number of alpha- and internal olefins is only 5-10 units lower than for a corresponding linear paraffin and about equivalent to the mono-branched isomers of the same carbon number.
1. A hydrocarbon mixture comprising:
   an olefin/paraffin mixture having a carbon number range from about C₈ to about C₂₀₊ wherein the olefin/paraffin mixture comprises:
      substantially no oxygenates;
      between about 1 wt% and 20 wt% olefin wherein at least about 1wt% of the olefin is mono-olefin;
      at least about 5 wt% n-paraffins;
      between about 2 and 94 wt% branched paraffins wherein at least about 30% of all branch groups are monomethyl and wherein the ratio of terminal monomethyl branching to internal monomethyl branching is at least about 1:1.5.
2. The hydrocarbon mixture of feature 1 wherein the ratio of terminal monomethyl branching to internal monomethyl branching is at least about 1:1.
3. The hydrocarbon mixture of feature 1 wherein the n-paraffins are present in an amount of at least about 10 wt% and wherein the ratio of terminal monomethyl-branching to internal monomethyl branching is at least about 1.5:1.
4. The hydrocarbon mixture of feature 1 wherein the n-paraffins are present in an amount of at least about 10 wt% and wherein the ratio of terminal monomethyl branching to internal monomethyl is at least about 2:1.
5. The hydrocarbon mixture of feature 1 wherein the olefin/paraffin mixture is a product of a
   Fischer-Tropsch reaction.
6. The synthetic fuel of feature 5 wherein the Fischer-Tropsch reaction feed syngas comprises 10-65% N₂.
7. A process for producing a synthetic fuel comprising the steps of
   (a) producing a light Fischer-Tropsch liquid;
   (b) dehydrating all or a part of the FT oxygenates in the LFTL while retaining the olefin content in the LFTL;
   (c) recovering an organic phase from the product of step (b);
   (d) blending the organic phase into a transportation fuel.
8. The process of feature 7 further comprising the step of (a₁) vaporizing the LFTL before step (b) and after step (a).
9. The process of feature 8 wherein the dehydrated product from step (b) is in the gaseous state and step (c) further includes condensing the dehydrated product.
10. The process of feature 9 wherein the heat from condensing the dehydrated product is recycled to at least partially vaporize the LFTL in step (a₁).
11. The process of feature 7 wherein the light Fischer-Tropsch liquid is produced from a feed syngas having 10-65% N₂.
12. The process of feature 11 wherein the feed syngas is produced by autothermal reformation in the presence of air.
13. A hydrocarbon mixture comprising:
   a paraffin mixture having a carbon number range from about C₈ to about C₂₀₊ wherein the paraffin mixture comprises:
      substantially no FT oxygenates;
      at least about 5 wt% n-paraffins;
      between about 2 and about 95 wt% branched paraffins wherein at least about 20% of all branch groups are monomethyl and wherein the ratio of terminal monomethyl branching to internal monomethyl branching is at least about 1:1.5.
14. The synthetic fuel of feature 13 wherein the ratio of terminal monomethyl branching to internal monomethyl branching is at least about 1:1.
15. The synthetic fuel of feature 13 wherein the n-paraffins are present in an amount of at least about 10wt% and wherein the ratio of terminal monomethyl branching to internal monomethyl branching is at least about 1.5:1.
16. The synthetic fuel of feature 13 wherein the n-paraffins are present in an amount of at least about 10 wt% and wherein the ratio of terminal monomethyl branching to internal monomethyl is at least about 2:1.
17. The synthetic fuel of feature 13 wherein the base fluid is a product of a Fischer-Tropsch reaction.
18. The synthetic fuel of feature 17 wherein the Fischer-Tropsch reaction feed syngas comprises 10-65% N₂.
19. A process for producing a synthetic fuel comprising the steps of:
   (a) producing a light Fischer-Tropsch liquid;
   (b) distilling the light Fischer-Tropsch liquid to obtain a C₈-C₂₀₊ product having C₈₋C₂₀₊ hydrocarbons and FT oxygenates.
   (c) dehydrating all or a part of the FT oxygenates in the C₈-C₂₀+ product while retaining the olefin content of the C₈-C₂₀₊ product;
   (d) recovering the dehydrated product;
   (e) separating the aqueous and organic phases of the dehydrated product; and
   (f) blending the organic phase of the dehydrated product into a transportation fuel.
20. The process of feature 19 wherein a C₁₀-C₂₀ product is obtained in step (b) and dehydrated in step (c).
21. The process of feature 19 further comprising the step of (b₁) vaporizing the C₈-C₂₀₊ product before step (c) and after step (b).
22. The process of feature 19 wherein the dehydrated product from step (c) is in the gaseous state and step (d) further includes condensing the dehydrated product.
23. The process of feature 23 wherein the heat from condensing the dehydrated product is recycled to at least partially vaporize the C₈-C₂₀₊ product in step (b₁).
24. The process of feature 19 wherein the light Fischer-Tropsch liquid is produced from a feed syngas having 10-65% N₂.
25. The process of feature 24 wherein the feed syngas is produced by autothermal reformation in the presence of air.
26. A synthetic transportation fuel comprising a non-hydroprocessed middle distillate fraction of a crude Fischer-Tropsch synthesis product comprising substantially no FT oxygenates.
27. The synthetic transportation fuel of feature 26 wherein the fuel has a cloud point of less than or equal to 5°C.
28. The synthetic transportation fuel of feature 27 wherein the fuel contains less than 1wt% aromatics.
29. The synthetic transportation fuel of feature 27 wherein the fuel contain less than or equal to 1ppm of nitrogen.
30. A transportation fuel produced by the process of feature 7.
31. A transportation fuel produced by the process of feature 19.
32. A blending stock for a transportation fuel produced by the process of feature 7.
33. A blending stock for a transportation fuel produced by the process of feature 19.
34. A synthetic transportation fuel consisting essentially of olefins and paraffins without presence of hetero-atoms or additives wherein the transportation fuel has a lubricity measured in accordance with ASTM D-6079 of less than or equal to 0.45mm at 60°C.
35. A synthetic transportation fuel comprising paraffins and olefins derived from the product of a Fischer-Tropsch synthesis and comprising no hetero-atoms or additives and having total insolubles of less than or equal to 1.5 mg/100 ml measured in accordance with ASTM D-2274.
36. A synthetic transportation fuel comprising paraffins and olefins derived from the product of a Fischer-Tropsch synthesis and containing no hetero-atoms having a lubricity measured in accordance with ASTM D-6079 of less than or equal to 0.45 mm at 60°C and a stability of total insolubles of less than or equal to 1.5 mg/100 ml measured in accordance with ASTM D-2274.

## Claims

1. A process for producing a synthetic fuel comprising the steps of
(a) producing a light Fischer-Tropsch liquid;
(b) dehydrating all or a part of the FT oxygenates in the LFTL while retaining the olefin content in the LFTL;
(c) recovering an organic phase from the product of step (b);
(d) blending the organic phase into a transportation fuel.

2. The process of claim 1 further comprising the step of (al) vaporizing the LFTL before step (b) and after step (a).

3. The process of claim 2 wherein the dehydrated product from step (b) is in the gaseous state and step (c) further includes condensing the dehydrated product.

4. The process of claim 3 wherein the heat from condensing the dehydrated product is recycled to at least partially vaporize the LFTL in step (al).

5. The process of claim 1 wherein the light Fischer-Tropsch liquid is produced from a feed syngas having 10-65% N₂.

6. The process of claim 5 wherein the feed syngas is produced by autothermal reformation in the presence of air.

7. The process of claim 1 further comprising blending the synthetic fuel to produce a transportation fuel.

8. The process of claim 1 further comprising producing a blending stock.
